# EUROPÄISCHE PATENTANMELDUNG

(11) **EP 3 260 627 A1**
(43) Veröffentlichungstag der Anmeldung: **27.12.2017**
(21) Anmeldenummer: 17000683.7
(22) Anmeldetag: 24.04.2017
(51) Int. Cl.: E04F 15/20, F24D 13/02, E04F 15/18

(54) **SANDWICHAUFBAU**

(30) Priorität: 30.04.2016 DE 102016005286
(71) Anmelder: HAPPICH GmbH, 42119 Wuppertal (DE)
(72) Erfinder: Pelzer, Marc, 6044 Udligenswil (CH)

(57) **Zusammenfassung**

Die Erfindung bezieht sich auf einen Sandwichaufbau, insbesondere einen vorzugsweise schwimmend gelagerter Fußbodenbelag 10, umfassend einen Oberflächenbelag 11 und eine Schalldämmung 12 mit einer integrierten Heizeinrichtung 13, vorgesehen insbesondere zur Verwendung als Fußbodenheizung. Es ist dabei erfindungsgemäß vorgesehen, dass die Schalldämmung 12 als schwer ausgebildeter Schallabsorber, insbesondere als Schwerfolie 14 und dass die integrierte Heizeinrichtung 13 als mit dem Schallabsorber, insbesondere der Schwerfolie 14 zusammenwirkende Heizfolie 15 ausgebildet ist. Die Erfindung bezieht sich außerdem auf ein Verfahren zur Herstellung eines solchen Sandwichaufbaus.

## Beschreibung

Die Erfindung bezieht sich auf einen Sandwichaufbau, insbesondere einen vorzugsweise schwimmend gelagerten Fußbodenbelag, umfassend einen Oberflächenbelag und eine Schalldämmung mit einer integrierten Heizeinrichtung, vorgesehen insbesondere zur Verwendung als Fußbodenheizung. Die Erfindung bezieht sich außerdem auf ein Verfahren zur Herstellung eines solchen Sandwichaufbaus.

Es sind dazu aus dem Stand der Technik verschiedene derartige Sandwichaufbaus, insbesondere vorzugsweise schwimmend gelagerte Fußbodenbeläge und Verfahren zur Herstellung eines solchen Sandwichaufbaus bekannt. Diese können dabei z.B. zur Verwendung als Fußbodenheizung dienen und weisen in den Fußbodenbelag integrierte Heizelemente auf, die häufig insbesondere Karbonfaserelemente aufweisen. Es sei dazu beispielhaft auf das DE 20 2005 021 513 U1 verwiesen. Bei den bekannten Ausführungsformen ist insbesondere nachteilig, dass dabei jede einzelne Schicht, das heißt also der Oberflächenbelag, die Schalldämmung, die integrierte Heizeinrichtung, und ggfs. zusätzliche Isolierunterlagen und Schutzfolien separat verlegt werden müssen, d.h., es ergibt sich ein enormer Verlegeaufwand. Weiterhin verbesserungswürdig ist bei den bekannten Ausführungsformen die teilweise sehr schlechte Wärmleitfähigkeit und Leistungseffizienz. Außerdem nachteilig ist die teilweise erhebliche Aufbauhöhe der bekannten Ausführungen. Bei den bekannten Verfahren zur Herstellung eines solchen Sandwichaufbaus ist außerdem der anlagentechnisch erforderliche Aufwand erheblich.

Ausgehend von diesen bekannten Sandwichaufbaus bzw. Verfahren zur Herstellung eines solchen Sandwichaufbaus liegt der Erfindung die Aufgabe zu Grunde, die bekannten Anordnungen bzw. Verfahren unter Beibehaltung der bisherigen Vorteile in der Weise zu verbessern bzw. weiter zu entwickeln, dass die Nachteile der bekannten Ausführungsformen vermieden werden, wobei bei dem Sandwichaufbau insbesondere der Verlegeaufwand reduziert, die Wärmeleitfähigkeit erhöht und die Leistungseffizienz gesteigert werden soll, und wobei bei dem Verfahren zu dessen Herstellung insbesondere der anlagentechnisch erforderliche Aufwand reduziert werden soll.

Die Aufgabe wird hinsichtlich des Sandwichaufbaus erfindungsgemäß dadurch gelöst, dass die Schalldämmung als schwer ausgebildeter Schallabsorber, insbesondere als Schwerfolie und dass die integrierte Heizeinrichtung als mit dem Schallabsorber, insbesondere der Schwerfolie zusammenwirkende Heizfolie ausgebildet ist. Auf diese Weise wird erstmalig mit einfachen Mitteln ein solcher Sandwichaufbau geschaffen, bei dem durch den erfindungsgemäßen Sandwichaufbau durch das nur einmalig erforderliche Verlegen der Sandwichbahn der Verlegeaufwand gegenüber den bekannten Lösungen deutlich reduziert wird. Der erfindungsgemäße Sandwichaufbau ist dabei verrutschsicher und wiederverwendbar. Durch den geringen Wärmewiderstand der verwendeten Schwerfolie ergibt sich außerdem eine sehr gute Wärmeleitfähigkeit mit einer nahezu optimalen Leistungseffizienz, außerdem ergeben sich gute akustische Dämmwerte. Durch den erfindungsgemäßen Sandwichaufbau ergibt sich außerdem eine sehr geringe Aufbauhöhe, der Komplettaufbau besitzt eine Gesamthöhe von etwa 1 mm.

Bei der bevorzugten Ausführungsform der vorliegenden Erfindung ist zwischen dem Oberflächenbelag und dem Schallabsorber, insbesondere der Schwerfolie, wenigstens eine Schutzschicht, insbesondere Schutzfolie, vorgesehen. Dadurch werden Beschädigungen der Heizfolie bzw. der Schwerfolie z.B. beim nachträglichen Verlegen des Oberflächenbelages wie Laminat, Holz, Fliesen, LVT etc. vermieden.

Nach einem weiteren Merkmal der vorliegenden Erfindung ist vorgesehen, dass die integrierte Heizeinrichtung als auf den Schallabsorber, insbesondere auf die Schwerfolie aufgetragene, insbesondere aufkaschierte Heizfolie ausgebildet ist. Dies ist eine in konstruktiver und herstellungstechnischer Hinsicht besonders vorteilhafte Ausführungsform.

Es empfiehlt sich nach einem weiteren Merkmal der vorliegenden Erfindung, dass die Schalldämmung als Trittschalldämmung ausgebildet ist, alternativ oder ergänzend ist nach einem weiteren Merkmal der vorliegenden Erfindung vorgesehen, dass die Schalldämmung als Gehschalldämmung ausgebildet ist.

Zweckmäßig ist nach einem weiteren Merkmal der vorliegenden Erfindung, dass die Heizfolie als Karbonfaservlies ausgebildet ist. Derartige Karbonfaservliese sind in wirkungstechnischer Hinsicht besonders vorteilhaft.

Nach einem weiteren Merkmal der vorliegenden Erfindung ist vorgesehen, dass der Oberflächenbelag aus Laminat besteht, bei davon abweichenden Ausführungsformen kann vorgesehen sein, dass der Oberflächenbelag aus Holz, Fliesen, LVT oder aus Teppich besteht.

Nach einem bezüglich der Sandwichbahn letzten Merkmal der vorliegenden Erfindung ist unterhalb des Schallabsorbers, insbesondere der Schwerfolie wenigstens eine zusätzliche Isolierunterlage vorgesehen, es wird dadurch die abgegebene Wärme zusätzlich in Richtung Oberflächenbelag gerichtet und dadurch die Effizienz zusätzlich erhöht.

Die Aufgabe wird hinsichtlich des Verfahrens zur Herstellung des Sandwichaufbaus erfindungsgemäß dadurch gelöst, dass das zur Herstellung eines Sandwichaufbaus nach einem der vorhergehenden Ausführungsformen ausgebildet ist. In bevorzugter Ausgestaltung werden dabei nach dem Extrudieren und Glätten des schwer ausgebildeten Schallabsorbers, insbesondere der Schwerfolie, die weiteren Schichten wie die Heizfolie sowie ggfs. die Schutzfolie, die zusätzliche Isolierunterlage und ggfs. weitere Schichten in derselben Anlage zur Herstellung von thermoplastischen Industriefolien auf Extrusionsbasis aufkaschiert, es wird dadurch die Herstellung im Vergleich zu den bekannten Lösungen mit verschiedenen Anlagen deutlich vereinfacht und dadurch kostengünstiger.

Die Erfindung ist in der einzigen Figur der Zeichnung in einem Ausführungsbeispiel dargestellt. Es zeigt:

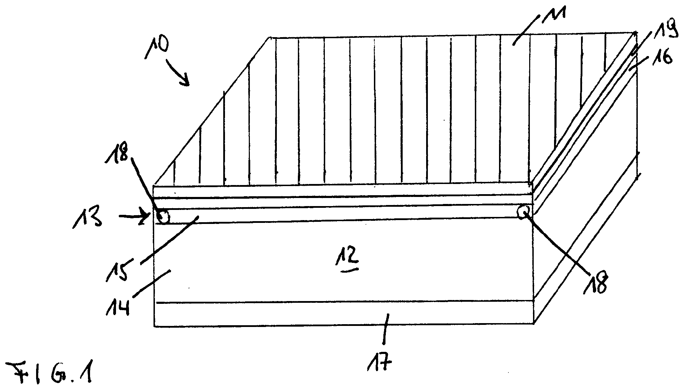

- Fig. 1: eine schematische, perspektivische, stark vereinfachte Querschnittsansicht des erfindungsgemäßen Sandwichaufbaus.

Die vorliegende Erfindung bezieht sich auf einen Sandwichaufbau, insbesondere einen vorzugsweise schwimmend gelagerten Fußbodenbelag, dieser ist generell mit 10 bezeichnet. Dieser Fußbodenbelag umfasst einen Oberflächenbelag 11 und eine Schalldämmung 12 mit einer integrierten Heizeinrichtung 13, vorgesehen insbesondere zur Verwendung als Fußbodenheizung. Die Erfindung bezieht sich außerdem auf ein Verfahren zur Herstellung eines solchen Sandwichaufbaus. Es ist dazu in der einzigen Figur der Zeichnung der erfindungsgemäße Sandwichaufbau in einer schematischen, perspektivischen, stark vereinfachten Querschnittsansicht dargestellt.

Es ist dabei erfindungsgemäß vorgesehen, dass die Schalldämmung 12 als schwer ausgebildeter Schallabsorber, insbesondere als Schwerfolie 14 und dass die integrierte Heizeinrichtung 13 als mit dem Schallabsorber, insbesondere der Schwerfolie 14 zusammenwirkende Heizfolie 15 ausgebildet ist, siehe die Fig. 1 der Zeichnung. Auf diese Weise wird erstmalig mit einfachen Mitteln ein solcher Sandwichaufbau geschaffen, bei dem durch den erfindungsgemäßen Sandwichaufbau durch das nur einmalig erforderliche Verlegen der Sandwichbahn der Verlegeaufwand gegenüber den bekannten Lösungen deutlich reduziert wird. Der erfindungsgemäße Sandwichaufbau ist dabei verrutschsicher und wiederverwendbar. Durch den geringen Wärmewiderstand der verwendeten Schwerfolie ergibt sich außerdem eine sehr gute Wärmeleitfähigkeit mit einer nahezu optimalen Leistungseffizienz, außerdem ergeben sich gute akustische Dämmwerte. Durch den erfindungsgemäßen Sandwichaufbau ergibt sich außerdem eine sehr geringe Aufbauhöhe, der Komplettaufbau besitzt eine Gesamthöhe von etwa 1 mm. Weiterhin ergibt sich eine geeignete Dampfsperre und ein Flammschutz, außerdem ist ein Ausgleich von Unebenheiten möglich.

Bei der in der Figur 1 der Zeichnung dargestellten Ausführungsform ist zwischen dem Oberflächenbelag 11 und dem Schallabsorber, insbesondere der Schwerfolie 14, eine Schutzschicht, in diesem Falle eine Schutzfolie 19, vorgesehen. Dadurch werden Beschädigungen der Heizfolie 15 bzw. der Schwerfolie 14 z.B. beim nachträglichen Verlegen des Oberflächenbelages 11 wie Laminat, Holz, Fliesen, LVT etc. vermieden. Weiterhin ist die integrierte Heizeinrichtung 13 bei dieser Ausführungsform als. auf den Schallabsorber, insbesondere auf die Schwerfolie 14 aufgetragene, hier aufkaschierte Heizfolie 15 ausgebildet. Dies ist eine in konstruktiver und herstellungstechnischer Hinsicht besonders vorteilhafte Ausführungsform. Bei dieser Ausführungsform ist außerdem die Schalldämmung als Tritt- und Gehschalldämmung ausgebildet. Die Heizfolie 15 ist in diesem Fall als Karbonfaservlies ausgebildet, eine in wirkungstechnischer Hinsicht besonders vorteilhafte Ausführungsform. Es sind dabei die Stromleiter (z.B aus Kupfer) der Heizfolie 15 in der Figur 1 mit 19 bezeichnet, es können dabei im Haus übliche Spannungen verwendet werden. Dabei werden außerdem zusätzliche Temperaturfühler und -regler verwendet.

Bei der dargestellten Ausführungsform ist außerdem vorgesehen, dass der Oberflächenbelag 11 aus Laminat besteht, bei davon abweichenden Ausführungsformen kann vorgesehen sein, dass der Oberflächenbelag aus Holz, Fliesen, LVT oder aus Teppich besteht. Natürlich sind hier auch noch andere Materialien denkbar. Weiterhin ist hier vorgesehen, dass unterhalb des Schallabsorbers, insbesondere der Schwerfolie 14, eine zusätzliche Isolierunterlage 17 vorgesehen ist, es wird dadurch die abgegebene Wärme zusätzlich in Richtung Oberflächenbelag 11 gerichtet und dadurch die Effizienz zusätzlich erhöht.

Die Erfindung bezieht sich außerdem auf ein Verfahren zur Herstellung des erfindungsgemäßen Sandwichaufbaus nach einem der vorhergehenden Ausführungsformen. In bevorzugter Ausgestaltung werden dabei nach dem Extrudieren und Glätten des schwer ausgebildeten Schallabsorbers, insbesondere der Schwerfolie 14, die weiteren Schichten wie die Heizfolie 15 sowie ggfs. die Schutzfolie 19, die zusätzliche Isolierunterlage 17 und ggfs. weitere Schichten in derselben Anlage zur Herstellung von thermoplastischen Industriefolien, hier mit hohem Mineralstoffanteil, auf Extrusionsbasis aufkaschiert, es wird dadurch die Herstellung im Vergleich zu den bekannten Lösungen mit verschiedenen Anlagen deutlich vereinfacht und dadurch kostengünstiger.

Im übrigen können alle weiteren erforderlichen, in der Figur der Zeichnung nicht dargestellten bzw. nicht bezeichneten Bauteile eine an sich bekannte Ausbildung aufweisen.

Wie bereits erwähnt, sind die dargestellten Ausführungsformen nur eine beispielsweise Verwirklichung der Erfindung. Diese ist nicht darauf beschränkt, es sind vielmehr noch mancherlei Abänderungen und Ausbildungen möglich. So sind insbesondere Abwandlungen in der konstruktiven Ausbildung des Sandwichaufbaus an sich und deren einzelnen Bestandteile denkbar. Weiterhin denkbar ist eine andere Anwendung als bei dem Fußbodenbelag 10, genannt seien dazu beispielhaft Wände.

### Bezugszeichenliste:

- 10.: Sandwichaufbau
- 11.: Oberflächenbelag (von 10)
- 12.: Schalldämmung
- 13.: integrierte Heizeinrichtung
- 14.: Schwerfolie
- 15.: Heizfolie
- 16.: Karbonfaservlies
- 17.: Isolierunterlage
- 18.: Stromleiter (von 16)
- 19.: Schutzfolie (zwischen 11 und 12)

## Patentansprüche

1. Sandwichaufbau, insbesondere vorzugsweise schwimmend gelagerter Fußbodenbelag 10, umfassend einen Oberflächenbelag 11 und eine Schalldämmung 12 mit einer integrierten Heizeinrichtung 13, vorgesehen insbesondere zur Verwendung als Fußbodenheizung, **dadurch gekennzeichnet, dass** die Schalldämmung 12 als schwer ausgebildeter Schallabsorber, insbesondere als Schwerfolie 14 und dass die integrierte Heizeinrichtung 13 als mit dem Schallabsorber, insbesondere mit der Schwerfolie 14 zusammenwirkende Heizfolie 15 ausgebildet ist.

2. Sandwichaufbau nach Anspruch 1, **dadurch gekennzeichnet, dass** zwischen dem Oberflächenbelag 11 und dem Schallabsorber, insbesondere der Schwerfolie 14, wenigstens eine Schutzschicht, insbesondere Schutzfolie 19, vorgesehen ist.

3. Sandwichaufbau nach Anspruch 1 oder 2, **dadurch gekennzeichnet, dass** die integrierte Heizeinrichtung 13 als auf den Schallabsorber, insbesondere auf die Schwerfolie 14 aufgetragene, insbesondere aufkaschierte Heizfolie 15 ausgebildet ist.

4. Sandwichaufbau nach einem der Ansprüche 1 bis 3, **dadurch gekennzeichnet, dass** die Schalldämmung 12 als Trittschalldämmung ausgebildet ist.

5. Sandwichaufbau nach einem der Ansprüche 1 bis 3, **dadurch gekennzeichnet, dass** die Schalldämmung 12 als Gehschalldämmung ausgebildet ist.

6. Sandwichaufbau nach einem der Ansprüche 1 bis 5, **dadurch gekennzeichnet, dass** die Heizfolie 15 als Karbonfaservlies 16 ausgebildet ist.

7. Sandwichaufbau nach einem der Ansprüche 1 bis 6, **dadurch gekennzeichnet, dass** der Oberflächenbelag 11 aus Laminat besteht.

8. Sandwichaufbau nach einem der Ansprüche 1 bis 6, **dadurch gekennzeichnet, dass** der Oberflächenbelag 11 aus Holz besteht.

9. Sandwichaufbau nach einem der Ansprüche 1 bis 6, **dadurch gekennzeichnet, dass** der Oberflächenbelag 11 aus Fliesen besteht.

10. Sandwichaufbau nach einem der Ansprüche 1 bis 6, **dadurch gekennzeichnet, dass** der Oberflächenbelag 11 aus LVT besteht.

11. Sandwichaufbau nach einem der Ansprüche 1 bis 6, **dadurch gekennzeichnet, dass** der Oberflächenbelag 11 aus Teppich besteht.

12. Sandwichaufbau nach einem der Ansprüche 1 bis 11, **dadurch gekennzeichnet, dass** unterhalb des Schallabsorbers, insbesondere der Schwerfolie 14 wenigstens eine zusätzliche Isolierunterlage 17 vorgesehen ist.

13. Verfahren zur Herstellung eines Sandwichaufbaus, **dadurch gekennzeichnet, dass** das Verfahren zur Herstellung eines Sandwichaufbaus nach einem der vorhergehenden Patentansprüche ausgebildet ist.

14. Verfahren zur Herstellung eines Sandwichaufbaus nach Anspruch 13, **dadurch gekennzeichnet, dass** nach dem Extrudieren und Glätten des schwer ausgebildeten Schallabsorbers, insbesondere der Schwerfolie 14, die weiteren Schichten wie die Heizfolie 15 sowie ggfs. die Schutzfolie 19, die zusätzliche Isolierunterlage 17 und ggfs. weitere Schichten in derselben Anlage zur Herstellung von thermoplastischen Industriefolien auf Extrusionsbasis aufkaschiert werden.
